# EUROPEAN PATENT SPECIFICATION

(11) **EP 0 492 282 B1**
(45) Date of publication and mention of the grant of the patent: **14.05.1997**
(21) Application number: 91121240.5
(22) Date of filing: 11.12.1991
(51) Int. Cl.: C08F 12/08, C08F 4/642

(54) **Process for producing a styrene polymer**
Verfahren zur Herstellung eines Styrolpolymers
Procédé de préparation de polymère de styrène

(30) Priority: 28.12.1990 JP 415573/90
(43) Date of publication of application: 01.07.1992
(73) Proprietor: IDEMITSU KOSAN COMPANY LIMITED, Tokyo 100 (JP)
(72) Inventor: Takeuchi, Mizutomo, Ichihara-shi, Chiba-ken (JP); Tomotsu, Norio, Ichihara-shi, Chiba-ken (JP); Kuramoto, Masahiko, Ichihara-shi, Chiba-ken (JP)
(74) Representative: Türk, Gille, Hrabal, Leifert

(56) References cited:
- EP-A- 0 277 003
- EP-A- 0 277 004
- EP-A- 0 421 659
- EP-A- 0 427 696

## Description

### BACKGROUND OF THE INVENTION

### 1. Field of the Invention

The present invention relates to a process for producing a styrene polymer and a catalyst for use therein. More particularly, it pertains to a process for efficiently producing a styrene polymer having a high degree of syndiotactic configuration in the stereochemical structure of the polymer main chain and to a catalyst to be used for the process.

### 2. Description of the Related Arts

It has recently been disclosed by the present inventors that a styrene polymer having a syndiotactic configuration is obtained by polymerizing a styrenic monomer by the use of a catalyst comprising as primary ingredients a transition-metal compound, especially a titanium compound and an alkylaluminoxane (Refer to Japanese Patent Application Laid-Open Nos. 187708/1987, 179906/1988, 241009/1988, etc.).

Methylaluminoxane, particularly suitable as an alkylaluminoxane is obtained usually by the reaction between trimethylaluminum and water. However, the above-mentioned reaction involves the problem that the reaction is difficult to put into practical production because of its violent reaction, and further suffers the disadvantage that in addition to requiring expensive trimethylaluminum as the starting material, an excessively large amount of methylaluminoxane is required as a component of the catalyst as compared with the quantity of a transition metal, thus causing an extremely expensive catalyst.

There has recently been reported that a polymerization catalyst not containing aluminoxane is capable of polymerizing α-olefin(principally, ethylene) by R. Taube (J. Organomet. Chem. C9-C11, 347 (1988)), H. Turner (J. Am. Chem. Soc. 111,2728 (1989)), R.F. Jordan (Organomet. 8,2892 (1989)), etc. Nevertheless, investigation has not yet been made on a polymerization catalyst not containing aluminoxane for the polymerization of styrenic monomer, leaving the problem that styrenic monomer, different from α-olefin, is likely to be polymerized into an atactic polymer in the presence of a cationic species.

### SUMMARY OF THE INVENTION

It is an object of the present invention to provide a process for effectively producing a styrene polymer having a high degree of syndiotactic configuration.

It is another object of the present invention to provide a catalyst capable of efficiently polymerizing a styrenic monomer into a styrene polymer having a high degree of syndiotactic configuration without the use of expensive aluminoxane required in a large quantity.

Other objects of the present invention will be obvious from the text of the specification hereinafter disclosed.

As the result of intensive research and investigation made by the present inventors for the purpose of attaining the above-described object, it has been found that the use of a catalyst combination comprising a specific transition-metal compound and a specific salt is capable of efficiently producing the objective styrene polymer having a high degree of syndiotactic configuration by virtue of its markedly improved activity. The present invention has been accomplished on the basis of the aforestated finding and information.

The present invention provides a process for producing a styrene polymer having a high degree of syndiotactic configuration which comprises polymerizing styrenic monomer in the presence of a catalyst comprising as primary ingredients (A) a transition-metal compound with two ligands having conjugated π electrons, which is at least one compound selected from the group consisting of the transitional-metal compounds represented by the general formula

M¹R¹R²XY (I)

wherein M¹ is titanium, zirconium or hafnium; R¹ and R² are each a cyclopentadienyl group, substituted cyclopentadienyl group, indenyl group or fluorenyl group; and X and Y are each a hydrogen atom, hydrocarbon radical having 1 to 20 carbon atoms, alkoxy group having 1 to 20 carbon atoms, amino group or thioalkyl group having 1 to 20 carbon atoms, but R¹ and R² may be each cross-linked by a hydrocarbon radical having 1 to 5 carbon atoms, alkylsilyl group having 1 to 20 carbon atoms and 1 to 5 silicon atoms or germanium-containing hydrocarbon group having 1 to 20 carbon atoms and 1 to 5 germanium atoms, and R¹ and R² are the same,
and (B) a coordination complex compound comprising a cation and an anion in which a plurality of radicals are bonded to a metal.

### DESCRIPTION OF PREFERRED EMBODIMENTS

The catalyst according to the present invention comprises as the primary ingredients, components (A) and (B). The component (A) is a transition-metal compound with two ligands having conjugated π electrons. As transition metals, titanium, zirconium, and hafnium are used. The transition-metal compounds (A) include at least one compound selected from the group consisting of the transitional-metal compounds represented by the general formula

M¹R¹R²XY (I)

wherein M¹ is titanium, zirconium or hafnium; R¹ and R² are each a cyclopentadienyl group, substituted cyclopentadienyl group, indenyl group or fluorenyl group; and X and Y are each a hydrogen atom, hydrocarbon radical having 1 to 20 carbon atoms, alkoxy group having 1 to 20 carbon atoms, amino group or thioalkyl group having 1 to 20 carbon atoms, but R¹ and R² may be each cross-linked by a hydrocarbon radical having 1 to 5 carbon atoms, alkylsilyl group having 1 to 20 carbon atoms and 1 to 5 silicon atoms or germanium-containing hydrocarbon group having 1 to 20 carbon atoms and 1 to 5 germanium atoms.

In more detail, each of R¹ and R² designates a cyclopentadienyl group, substituted cyclopentadienyl group, more specifically, methylcyclopentadienyl group;
1,3-dimethylcyclopentadienyl group;
1,2,4-trimethylcyclopentadienyl group;
1,2,3,4-tetramethylcyclopentadienyl group;
pentamethylcyclopentadienyl group;
trimethylsilylcyclopentadienyl group;
1,3-di(trimethylsilyl)cyclopentadienyl group;
1,2,4-tri(trimethylsilyl)cyclopentadienyl group;
tert-butylcyclopentadienyl group;
1,3-di(tert-butyl)cyclopentadienyl group or 1,2,4-tri(tert-butyl)cyclopentadienyl group, indenyl group, substituted indenyl group, more specifically, methylindenyl group; dimethylindenyl group or trimethylindenyl group, fluorenyl group, or substituted fluorenyl group such as methylfluorenyl group, and may be the same or different and cross-linked by a alkylidene group having 1 to 5 carbon atoms, more specifically, methine group; ethylidene group; propylidene group or dimethylcarbyl group, or an alkylsilyl group having 1 to 20 carbon atoms and 1 to 5 silicon atoms, more specifically, dimethylsilyl group; diethylsilyl group or dibenzylsilyl group. Each of X and Y independently indicates, as described above but more specifically, a hydrogen atom; an alkyl group having 1 to 20 carbon atoms such as methyl group, ethyl group, propyl group, n-butyl group, isobutyl group, amyl group, isoamyl group, octyl group or 2-ethylhexyl group; an aryl group having 6 to 20 carbon atoms such as phenyl group or naphthyl group; an arylalkyl group having 7 to 20 carbon atoms such as benzyl group; an alkoxyl group having 1 to 20 carbon atoms such as methoxyl group, ethoxyl group, propoxyl group, butoxyl group, amyloxy group, hexyloxy group, octyloxy group or 2-ethylhexyloxy group; an aryloxy group having 6 to 20 carbon atoms such as phenoxy group; an amino group; or a thioalkoxyl group having 1 to 20 carbon atoms.

Specific examples of the transition-metal compounds represented by the general formula (I) include
bis(cyclopentadienyl)dimethyltitanium;
bis(cyclopentadienyl)diethyltitanium;
bis(cyclopentadienyl)dipropyltitanium;
bis(cyclopentadienyl)dibutyltitanium;
bis(methylcyclopentadienyl)dimethyltitanium;
bis(tert-butylcyclopentadienyl)dimethyltitanium;
bis(1,3-dimethylcyclopentadienyl)dimethyltitanium;
bis(1,3-di-tert-butylcyclopentadienyl)dimethyltitanium;
bis(1,2,4-trimethylcyclopentadienyl)dimethyltitanium;
bis(1,2,3,4-tetramethylcyclopentadienyl)dimethyltitanium;
bis(trimethylsilylcyclopentadienyl)dimethyltitanium;
bis(1,3-di(trimethylsilyl)cyclopentadienyl)dimethyltitanium;
bis(1,2,4-tri((trimethylsilyl)cyclopentadienyl) dimethyltitanium; bis(indenyl)dimethyltitanium;
bis(fluorenyl)dimethyltitanium;
methylenebis(cyclopentadienyl)dimethyltitanium;
ethylidenebis(cyclopentadienyl)dimethyltitanium;
methylenebis(2,3,4,5-tetramethylcyclopentadienyl) dimethyltitanium; ethylidenebis(2,3,4,5-tetramethylcyclopentadienyl)dimethyltitanium;
dimethylsilylbis(2,3,4,5-tetramethylcyclopentadienyl) dimethyltitanium; methylenebisindenyldimethyltitanium;
ethylidenebisindenyldimethyltitanium;
dimethylsilylbisindenyldimethyltitanium;
methylenebisfluorenyldimethyltitanium;
ethylidenbisfluorenyldimethyltitanium;
dimethylsilylbisfluorenyldimethyltitanium; methylene(tert-butylcyclopentadienyl)(cyclopentadienyl)dimethyltitanium;
methylene(cyclopentadienyl)(indenyl)dimethyltitanium;
ethylidene(cyclopentadienyl)(indenyl)dimethyltitanium;
dimethylsilyl(cyclopentadienyl)(indenyl)dimethyltitanium;
methylene(cyclopentadienyl)(fluorenyl)dimethyltitanium;
ethylidene(cyclopentadienyl)(fluorenyl)dimethyltitanium;
dimethylsilyl(cyclopentadienyl)(fluorenyl)dimethyltitanium;
methylene(indenyl)(fluorenyl)dimethyltitanium;
ethylidene(indenyl)(fluorenyl)dimethyltitanium;
dimethylsilyl(indenyl)(fluorenyl)dimethyltitanium;
bis(cyclopentadienyl)dibenzyltitanium;
bis(tert-butylcyclopentadienyl)dibenzyltitanium;
bis(methylcyclopentadienyl)dibenzyltitanium;
bis(1,3-dimethylcyclopentadienyl)dibenzyltitanium;
bis(1,2,4-trimethylcyclopentadienyl)dibenzyltitanium;
bis(1,2,3,4-tetramethylcyclopentadienyl)dibenzyltitanium;
bis(pentamethylcyclopentadienyl)dibenzyltitanium;
bis(trimethylsilylcyclopentadienyl)dibenzyltitanium;
bis[1,3-di-(trimethyl)cyclopentadienyl]dibenzyltitanium;
bis[1,2,4-tri(trimethylsilyl)cyclopentadienyl] dibenzyltitanium; bis(indenyl)dibenzyltitanium;
bis(fluorenyl)dibenzyltitanium;
methylenebis(cyclopentadienyl)dibenzyltitanium;
ethylidenebis(cyclopentadienyl)dibenzyltitanium;
methylenebis(2,3,4,5-tetramethylcyclopentadienyl) dibenzyltitanium; ethylidenebis(2,3,4,5-tetramethylcyclopentadienyl)dibenzyltitanium; dimethylsilylbis(2,3,4,5-tetramethylcyclopentadienyl) dibenzyltitanium; methylenebis(indenyl)dibenzyltitanium;
ethylidenebis(indenyl)dibenzyltitanium;
dimethylsilylbis(indenyl)dibenzyltitanium;
methylenebis(fluorenyl)dibenzyltitanium;
ethylidenebis(fluorenyl)dibenzyltitanium;
dimethylsilylbis(fluorenyl)dibenzyltitanium;
methylene(cyclopentadienyl)(indenyl)dibenzyltitanium;
ethylidene(cyclopentadienyl)(indenyl)dibenzyltitanium;
dimethylsilyl(cyclopentadienyl)(indenyl)dibenzyltitanium;
methylene(cyclopentadienyl)(fluorenyl)dibenzyltitanium;
ethylidene(cyclopentadienyl)(fluorenyl)dibenzyltitanium;
dimethylsilyl(cyclopentadienyl)(fluorenyl)dibenzyltitanium;
methylene(indenyl)(fluorenyl)dibenzyltitanium;
ethylidene(indenyl)(fluorenyl)dibenzyltitanium;
dimethylsilyl(indenyl)(fluorenyl)dibenzyltitanium;
biscyclopentadienyltitanium dimethoxide;
biscyclopentadienyltitanium diethoxide;
biscyclopentadienyltitanium dipropoxide;
biscyclopentadienyltitanium dibutoxide;
biscyclopentadienyltitanium diphenoxide;
bis(methylcyclopentadienyl)titanium dimethoxide;
bis(1,3-dimethylcyclopentadienyl)titanium dimethoxide;
bis(1,2,4-trimethylcyclopentadienyl)titanium dimethoxide;
bis(1,2,3,4-tetramethylcyclopentadienyl)titanium dimethoxide;
bispentamethylcyclopentadienyltitanium dimethoxide;
bis(trimethylcyclopentadienyl)titanium dimethoxide; bis[1,3-di(trimethylsilyl)cyclopentadienyl]titanium dimethoxide;
bis[1,2,4-tri(trimethylsilyl)cyclopentadienyl]titanium dimethoxide; bisindenyltitanium dimethoxide;
bisfluorenyltitanium dimethoxide;
methylenebiscyclopentadienyltitanium dimethoxide;
ethylidenebiscyclopentadienyltitanium dimethoxide;
methylenebis(2,3,4,5-tetramehtylcyclopentadienyl)titanium dimethoxide; ethylidenebis(2,3,4,5-tetramethylcyclopentadienyl)titanium dimethoxide;
dimethylsilylbis(2,3,4,5-tetramethylcyclopentadienyl)titanium dimethoxide; methylenebisindenyltitanium dimethoxide;
methylenebis(methylindenyl)titanium dimethoxide;
ethylidenebisindenyltitanium dimethoxide;
dimethylsilylbisindenyltitanium dimethoxide;
methylenebisfluorenyltitanium dimethoxide;
methylenebis(methylfluorenyl)titanium dimethoxide;
ethylidenebisfluorenyltitanium dimethoxide;
dimethylsilylbisfluorenyltitanium dimethoxide;
methylene(cyclopentadienyl)(indenyl)titanium dimethoxide;
ethylidene(cyclopentadienyl)(indenyl)titanium dimethoxide;
dimethylsilyl(cyclopentadienyl)(indenyl)titanium dimethoxide;
methylene(cyclopentadienyl)(fluorenyl)titanium dimethoxide;
ethylidene(cyclopentadienyl)(fluorenyl)titanium dimethoxide;
dimethylsilyl(cyclopentadienyl)(fluorenyl)titanium dimethoxide; methylene(indenyl)(fluorenyl)titanium dimethoxide; ethylidene(indenyl)(fluorenyl)titanium dimethoxide and dimethylsilyl(indenyl)(fluorenyl)titanium dimethoxide.

Examples of the transition-metal compounds represented by the formula (I) wherein M¹ is zirconium include ethylidenebiscyclopentadienylzirconium dimethoxide, and dimethylsilylbiscyclopentadienylzirconium dimethoxide. Examples of the hafnium compounds according to the general formula (I) include ethylidenebiscyclopentadienylhafnium dimethoxide and dimethylsilylbiscyclopentadienylhafnium dimethoxide. Particularly desirable transition-metal compounds among them are titanium compounds.

The component (B) which constitutes the primary ingredients of the catalyst together with the above-mentioned component (A) is a coordination complex compound comprising a cation and an anion in which a plurality of radicals are bonded to a metal. A variety of such coordination complex compounds are available, and those represented by the following general formula (II) or (III) are preferably employed:

([L¹-H]^{g+})ₕ([M²X¹X² --- Xⁿ]^{(n-m)-})i (II)

or

([L²]^{g+})ₕ([M³X¹X²---Xⁿ]^{(n-m)-})i (III)

wherein L² is M⁴, R³R⁴M⁵ or R⁵₃C as hereinafter described; L₁ is a Lewis base; M² and M³ are each a metal selected from Groups V to XV of the Periodic Table; M⁴ is a metal selected from Groups VIII to XII of the Periodic Table; M⁵ is a metal selected from Groups VIII to X of the Periodic Table; X¹ to Xⁿ are each a hydrogen atom, dialkylamino group, alkoxy group, aryloxy group, alkyl group having 1 to 20 carbon atoms, aryl group having 6 to 20 carbon atoms, alkylaryl group, arylalkyl group, substituted alkyl group, organometalloid group or halogen atom; R³ and R⁴ are each a cyclopentadienyl group, substituted cyclopentadienyl group, indenyl group or fluorenyl group; R⁵ is an alkyl group; m is the valency of each of M² and M³, indicating an integer of 1 to 7; n is an integer of 2 to 8; g is the ion valency of each of [L¹-H] and [L²], indicating an integer of 1 to 7; h is an integer of 1 or more; and i=hxg/(n-m).

Specific examples of M² and M³ include B, Al, Si, P, As, Sb, etc.; those of M⁴ include Ag, Cu, etc.; and those of M⁵ include Fe, Co, Ni, etc. Among them, Fe is preferable. Specific examples of X¹ to Xⁿ include dialkylamino group such as dimethylamino and diethylamino; alkoxyl group such as methoxy, ethoxy and n-butoxy; aryloxy group such as phenoxy, 2,6-dimethylphenoxy and naphthyloxy; alkyl group having 1 to 20 carbon atoms such as methyl, ethyl, n-propyl, iso-propyl, n-butyl, n-octyl and 2-ethylhexyl; aryl group having 6 to 20 carbon atoms, alkylaryl group or arylalkyl group such as phenyl, p-tolyl, benzyl, pentafluorophenyl, 3,5-di(trifluoromethyl)phenyl, 4-tert-butylphenyl, 2,6-dimethylphenyl, 3,5-dimethylphenyl, 2,4-dimethylphenyl and 1,2-dimethylphenyl; halogen such as F, Cl, Br and I; and organometalloid such as pentamethylantimony group, trimethylsilyl group, trimethylgermyl group, diphenylarsine group, dicyclohexylantimony group and diphenylboron group. Specific examples of substituted cyclopentadienyl of R³ and R⁴ include methylcyclopentadienyl, butylcyclopentadienyl and pentamethylcyclopentadienyl.

Among the compounds represented by the general formula (II) or (III), specific examples of preferably usable compounds include, as the compound of general formula (II), triethylammonium tetraphenylborate, tri(n-butyl)ammonium tetraphenylborate, trimethylammonium tetraphenylborate, triethylammonium tetra(pentafluorophenyl)borate, tri(n-butyl)ammonium tetra(pentafluorophenyl)borate, and triethylammonium hexafluoroarsenate, pyridinium tetra(pentafluorophenyl)borate, pyrrolinium tetra(pentafluorophenyl)borate, N,N-dimethylanilinium tetra(pentafluorophenyl)borate, methyldiphenylammonium tetra(pentafluorophenyl)borate, and as the compound of general formula (III), ferrocenium tetraphenylborate, dimethylferrocenium tetra(pentafluorophenyl)borate, ferrocenium tetra(pentafluorophenyl)borate, acetylferrocenium tetra(pentafluorophenyl)borate, formylferrocenium tetra(pentafluorophenyl)borate, cyanoferrocenium tetra(pentafluorophenyl)borate, cyanoferrocenium tetra(pentafluorophenyl)borate, silver tetraphenylborate, silver tetra(pentafluorophenyl)borate, trityl tetraphenylborate, trityl tetra(pentafluorophenyl)borate, silver hexafluoroarsenate, silver hexafluoroantimonate, and silver tetrafluoroborate.

The catalyst according to the present invention further comprises optionally an organoaluminum compound (C) represented by the general formula

R⁶ ₘAl(OR⁷)ₙX₃₋ₘ₋ₙ (IV)

wherein R⁶ and R⁷ independently are each an alkyl group having 1 to 8, preferably 1 to 4 carbon atoms; X is a hydrogen atom or a halogen atom such as Cl, Br and F; m satisfies the relation 0<m≦3, desirably m=2 or 3, more desirably m=3; and n satisfies the relation 0≦n<3. The preferable examples of the compounds among them include trimethylaluminium and triisobutylaluminium as R₃Al and R₂AlH, respectively wherein R₂ and R₃ are each an alkyl group.

In the case where the catalyst of the present invention comprises the components (A) and (B) without the component (C), the component (A) is preferably a transition-metal compound having two ligands with conjugated π electrons and further a metal-hydrogen bond or metal-carbon σ-bond, enumerated by dimethylsilylbis(cyclopentadienyl) benzyltitanium and methylenebis(cyclopentadienyl) benzyltitanium.

The catalyst of the present invention comprises the components (A) and (B) and optionally the component (C) each as a primary ingredient, and if desired, may be added with other components. The compounding ratios of the components (A), (B) and (C) vary depending on the several conditions and can not be unequivocally determined. As a general rule, however, the molar ratio of the component (A) to the component (B) is 0.1 : 1 to 1 : 0.1, and that of the component (A) to the component (C) is 1 : 0.1 to 1 : 1000.

As described herebefore, the catalyst according to the present invention exhibits a high activity for the production of a styrene polymer having a high degree of syndiotactic configuration. Hence, the present invention further provides a process for producing a styrene polymer having a high degree of syndiotactic configuration by the use of the above -stated catalyst.

The production of a styrene polymer according to the process of the present invention is put into practice by polymerizing or copolymerizing styrenic monomers such as styrene and/or a styrene derivative exemplified by an alkylstyrene, alkoxystyrene, halogenated styrene, vinyl benzoate, etc. in the presence of the catalyst comprising the foregoing components (A) and (B) and optionally the component (C) each as an essential component.

There are available a variety of methods for bringing the catalyst of the present invention into contact with a styrenic monomer, or monomers, including:
(1) A method in which the reaction product of the components (A) and (B) is brought into contact with a monomer or monomers;
(2) A method in which the mixture of the reaction product of the components (A) and (B), and the component (C) is brought into contact with a monomer or monomers;
(3) A method in which the mixture of the reaction product of the components (A) and (C), and the component (B) is brought into contact with a monomer or monomers; and
(4) A method in which each of the components (A), (B) and (C) is added to a monomer or monomers one by one in any order.

The reaction product of the components (A) and (B) may be isolated and purified in advance.

The polymerization of a styrenic monomer or monomers may be carried out by means of bulk polymerization or solution polymerization by the use of an aliphatic hydrocarbon solvent such as pentane, hexane or heptane, an alicyclic hydrocarbon solvent such as cyclohexane or an aromatic hydrocarbon solvent such as benzene, toluene or xylene. The polymerization temperature is not specifically limited, but is usually in the range 0 to 90°C, preferably 20 to 70°C.

The molecular weight of the styrene polymer to be obtained can be effectively modified by means of polymerization reaction in the presence of hydrogen.

The styrene polymer thus obtained possesses a high degree of syndiotactic configuration. Here, the styrene polymer having a high degree of syndiotactic configuration means that its stereochemical structure is mainly of syndiotactic configuration, i.e. the stereostructure in which phenyl groups or substituted phenyl group as side chains are located alternately at opposite directions relative to the main chain consisting of caron-carbon bonds. Tacticity is quantitavely determined by the nuclear magnetic resonance method (¹³C-NMR method) using carbon isotope. The tacticity as determined by the ¹³C-NMR method can be indicated in terms of proportions of structural units continuously connected to each other, i.e., a diad in which two structural units are connected to each other, a triad in which three structural units are connected to each other and a pentad in which five structural units are connected to each other. "The styrene polymers having a high degree of syndiotactic configuration" as mentioned in the present invention means polystyrene, poly(alkylstyrene), poly(halogenated styrene), poly(alkoxystyrene), poly(vinyl benzoate), the mixtures thereof, and copolymers containing the above polymers as main components, having such a syndiotacticity that the proportion of racemic diad is at least 75%, preferably at least 85%, or the proportion of racemic pentad is at least 30%, preferably at least 50%. The poly(alkylstyrene) include poly(methylstyrene), poly(ethylstyrene), poly(isopropylstyrene) and poly(tert-butylstyrene), poly(halogenated styrene) include, poly(chlorostyrene), poly(bromostyrene), and poly(fluorostyrene). The poly(alkoxystyrene)include, poly(methoxystyrene), and poly(ethoxystyrene).

The most desirable styrene polymers are polystyrene, poly(p-methylstyrene), poly(m-methylstyrene), poly(p-tert-butylstyrene), poly(p-chlorostyrene), poly(m-chlorostyrene), poly(p-fluorostyrene), and the copolymer of styrene and p-methylstyrene.

The styrene polymer obtained according to the process of the present invention is that with a high degree of syndiotaticity usually having a weight-average molecular weight of 10,000 to 3,000,000, preferably 100,000 to 1,500,000 with a number-average molecular weight of 5,000 to 1,500,000, preferably 50,000 to 1,000,000. Moreover, the styrene polymer having an exceptionally high degree of syndiotacticity as well as an extremely high purity can be obtained by the steps of deashing treatment of the polymer thus obtained, as required, with a washing agent containing hydrochloric acid, etc.; additional washing; drying under reduced pressure; cleaning with a solvent such as methyl ethyl ketone for removing solubles therein; and treatment of the insolubles thus oftained by the use of chloroform, etc.

The styrene polymer with a high degree of syndiotacticity has a melting point of 160 to 310°C and is remarkably superior to the conventional styrene polymer with an atactic configuration in terms of heat resistance.

The catalyst according to the present invention is inexpensive as compared with the conventional catalyst comprising an aluminoxane as a primany ingredient, and exhibits a high activity for the production of a styrene polymer having a high degree of syndiotactic configuration. According to the process of the present invention, therefore, a syndiotactic styrene polymer is obtained at a reduced production cost and with an enhanced efficiency.

The present invention will be described in more detail with reference to the following nonlimiting Examples and Comparative Examples.

### Example 1

Into a 500 ml reaction vessel, 200 ml of styrene was placed with heating to 50°C, and then, 5 ml of a mixed contact solution of 1.5 mmol of dimethylsilylbis (cyclopentadienyl) benzyltitanium and 1.5 mmol of dimethylferrocenium tetra(pentafluorophenyl)borate in toluene was added thereto, and polymerization was carried out at 50°C for 3 hours. Then, polymerization was arrested with methanol, and the mixture was deashed with hydrochloric acid-methanol, washed with methanol, and dried to give 20.0 g of polymer. The polymer was subjected to extraction with a Soxhlet extractor using methyl ethyl ketone as a solvent to give an extraction residue (methyl ethyl ketone insoluble portion; MIP) of 32% by weight. It was confirmed that the resultant polymer was a sydiotactic polystyrene having a melting point (Tm) of 264°C and a weight-average molecular weight of 95,000.

### Example 2

The procedure in Example 1 was repeated except that 1.5 mmol of triisobutylaluminum was added in addition to dimethylsilylbis(cyclopentadienyl)benzyltitanium and dimethylferrocenium tetra(pentafluorophenyl)borate. The polymer was obtained in a yield of 24.0 g as an extraction residue (MIP) of 18% by weight, and was a syndiotactic polystyrene having a melting point (Tm) of 263°C and a weight-average molecular weight of 150,000.

## Claims

1. A process for producing a styrene polymer having a high degree of syndiotactic configuration which comprises polymerizing styrenic monomer in the presence of a catalyst comprising as primary ingredients (A) a transition-metal compound with two ligands having conjugated π electrons , which is at least one compound selected from the group consisting of the transitional-metal compounds represented by the general formula
M¹R¹R²XY (I)
wherein M¹ is titanium, zirconium or hafnium; R¹ and R² are each a cyclopentadienyl group, substituted cyclopentadienyl group, indenyl group or fluorenyl group; and X and Y are each a hydrogen atom, hydrocarbon radical having 1 to 20 carbon atoms, alkoxy group having 1 to 20 carbon atoms, amino group or thioalkyl group having 1 to 20 carbon atoms, but R¹ and R² may be each cross-linked by a hydrocarbon radical having 1 to 5 carbon atoms, alkylsilyl group having 1 to 20 carbon atoms and 1 to 5 silicon atoms or germanium-containing hydrocarbon group having 1 to 20 carbon atoms and 1 to 5 germanium atoms, and R¹ and R² are the same,
and (B) a coordination complex compound comprising a cation and an anion in which a plurality of radicals are bonded to a metal.

2. The process according to claim 1, wherein said high degree of syndiotactic configuration is a syndiotacticity in which the proportion of racemic diad is at least 75%.

3. The process according to claim 1, wherein said high degree of syndiotactic configuration is a syndiotacticity in which the proportion of racemic diad is at least 85%.

4. The process according to claim 1, wherein said styrenic polymer has a weight-average molecular weight of 10,000 to 3,000,000.

5. A process according to claim 1, wherein the catalyst comprises (C) an organoaluminum compound in addition to the transition-metal compound (A) and the coordination complex compound (B).

## Revendications

1. Procédé de production d'un polymère de styrène ayant un haut degré de configuration syndiotactique, qui comprend la polymérisation d'un monomère styrénique en présence d'un catalyseur comprenant comme ingrédients principaux (A) un composé de métal de transition avec deux ligands ayant des électrons π conjugués, qui est au moins un composé choisi dans le groupe constitué des composés de métal de transition représentés par la formule générale :
M¹R¹R²XY (I)
où M¹ est le titane, le zirconium ou le hafnium ; R¹ et R² représentent respectivement un groupe cyclopentadiényle, un groupe cyclopentadiényle substitué, un groupe indénylé, ou un groupe fluorényle ; et X et Y représentent respectivement un atome d'hydrogène, un radical hydrocarbure ayant 1 à 20 atomes de carbone, un groupe alcoxy ayant 1 à 20 atomes de carbone, un groupe amino ou un groupe thioalkyle ayant 1 à 20 atomes de carbone, mais R¹ et R² peuvent être liés respectivement par un radical hydrocarbure ayant 1 à 5 atomes de carbone, un groupe alkylsilyle ayant 1 à 20 atomes de carbone, et 1 à 5 atomes de silicium, ou un groupe hydrocarbure contenant du germanium ayant 1 à 20 atomes de carbone et 1 à 5 atomes de germanium, et R¹ et R² sont identiques,
et (B) un composé complexe de coordination comprenant un cation et un anion où une pluralité de radicaux sont liés au métal.

2. Procédé selon la revendication 1, où ledit degré élevé de configuration syndiotactique est une syndiotacticité où la proportion de radical bivalent racémique est au moins 75%.

3. Procédé selon la revendication 1, où ledit degré élevé de configuration syndiotactique est une syndiotacticité où la proportion de radical bivalent racémique est au moins 85%.

4. Procédé selon la revendication 1, où ledit polymère styrénique a un poids moléculaire moyen en poids de 10 000 à 3 000 000.

5. Procédé selon la revendication 1, où le catalyseur comprend (C) un composé d'organoaluminium en plus du composé de métal de transition (A) et du composé complexe de coordination (B).

## Patentansprüche

1. Verfahren zur Herstellung eines Styrolpolymers mit einem hohen Grad der syndiotaktischen Konfiguration, das umfaßt: Polymerisation eines Styrolmonomers in Gegenwart eines Katalysators der als primäre Bestandteile umfaßt: (A) eine Übergangsmetallverbindung mit zwei Liganden, die konjugierte π-Elektronen aufweisen, die mindestens eine Verbindung ist, ausgewählt aus der Gruppe die besteht aus Übergangsmetallverbindungen, dargestellt durch die allgemeine Formel
M¹R¹R²XY (I)
worin M¹ Titan, Zirkon oder Hafnium ist; R¹ und R² jeweils eine Cyclopentadienylgruppe, eine substutierte Cyclopentadienylgruppe, eine Indenylgruppe oder Fluorenylgruppe sind; und X und Y jeweils ein Wasserstoffatom, ein Kohlenwasserstoffradikal mit 1 bis 20 Kohlenstoffatomen, eine Alkoxygruppe mit 1 bis 20 Kohlenstoffatomen, eine Aminogruppe oder eine Thioalkylgruppe mit 1 bis 20 Kohlenstoffatomen sind, R¹ und R² aber durch ein Kohlenwasserstoffradikal mit 1 bis 5 Kohlenstoffatomen, eine Alkylsilylgruppe mit 1 bis 20 Kohlenstoffatomen und 1 bis 5 Siliciumatomen oder eine Germanium-enthaltende Kohlenwasserstoffgruppe mit 1 bis 20 Kohlenstoffatomen und 1 bis 5 Germaniumatomen verbrückt sein können, und R¹ und R² gleich sind, und (B) eine Koordinationskomplexverbindung, die ein Kation und ein Anion, in dem eine Mehrzahl von Radikalen an ein Metall gebunden sind, umfaßt.

2. Verfahren nach Anspruch 1, worin der erwähnte hohe Grad der syndiotaktischen Konfiguration eine Syndiotaktizität bedeutet, bei der der Anteil der racemischen Diaden mindestens 75 % beträgt.

3. Verfahren nach Anspruch 1, worin der erwähnte hohe Grad der syndiotaktischen Konfiguration eine Syndiotaktizität bedeutet, bei der der Anteil der racemischen Diaden mindestens 85 % beträgt.

4. Verfahren nach Anspruch 1, worin das Styrolpolymer eine massenmittlere Molekülmasse von 10000 bis 3000000 aufweist.

5. Verfahren nach Anspruch 1, worin der Katalysator (C) zusätzlich zu der Übergangsmetallverbindung (A) und der Koordinationskomplexverbindung (B) eine Organoaluminiumverbindung aufweist.
